# EUROPÄISCHE PATENTSCHRIFT

(11) **EP 0 847 898 B1**
(45) Veröffentlichungstag und Bekanntmachung des Hinweises auf die Patenterteilung: **06.06.2001**
(21) Anmeldenummer: 97120232.0
(22) Anmeldetag: 19.11.1997
(51) Int. Cl.: B60R 3/00

(54) **Sattelzugmaschine**
Trailer tractor
Tracteur de semi-remorque

(30) Priorität: 13.12.1996 DE 19651916
(43) Veröffentlichungstag der Anmeldung: 17.06.1998
(73) Patentinhaber: MAN Nutzfahrzeuge Aktiengesellschaft, 80976 München (DE)
(72) Erfinder: Gerusel, Karsten, Dipl.-Ing., 80997 München (DE)

(56) Entgegenhaltungen:
- US-A- 3 628 811
- US-A- 4 161 232

## Beschreibung

Die Erfindung betrifft eine Sattelzugmaschine mit Merkmalen der im Oberbegriff des Anspruches 1 angegebenen Art.

Bei herkömmlichen Sattelzugmaschinen wird die Sattelkupplung über eine sie tragende massive Montageplatte auf dem Fahrgestell-Rahmen befestigt. Diese Montageplatte ist relativ großflächig und hat eine vergleichsweise hohe Steifigkeit und trägt somit in erheblichem Umfang zur Versteifung des Fahrgestell-Rahmens bei. In zunehmendem Maße werden jedoch alternativ sogenannte Leichtbau-Sattelkupplungen verwendet, bei denen aus Gewichts- und Kosteneinsparungsgründen auf die bisherige massive Montageplatte verzichtet ist und die Sattelkupplung nur mehr über eine vergleichsweise schmale Quertraverse mit dem Fahrgestell-Rahmen verbunden wird. Mit einer solchen Quertraverse fehlt im Fahrgestell-Rahmen der bisher über die Montageplatte darstellbare Schubverband, mit der Folge, daß der Fahrgestell-Rahmen insgesamt "weicher" wird, was aufgrund der Relativbewegungen der Rahmenteile untereinander während des Fahrbetriebes zu einem schwammigen Fahrverhalten der Sattelzugmaschine führt. Zwecks Vermeidung zu nachteiliger Auswirkungen auf das Fahrverhalten hat man bei Verwendung von LeichtbauSattelkupplungen in machen Fällen die gewünschte Rahmen-Steifigkeit wieder durch den Einbau zusätzlicher Querträger vor und/oder hinter der Leichtbau-Sattelkupplung hergestellt. Jeder dieser zusätzlichen Querträger mindert jedoch die Kosteneinsparung, die sich durch Verwendung der Leichtbau-Sattelkupplung im Vergleich zur Ausführung der Sattelkupplung mit massiver Montageplatte ergibt.

Es ist daher Aufgabe der Erfindung, den Fahrgestell-Rahmen einer Sattelzugmaschine, an dem eine Leichtbau-Sattelkupplung montiert ist, durch gezielte Maßnahmen so zu versteifen, daß sich ein gutes Fahrverhalten in Verbindung mit einem erhöhten Betriebskomfort ergibt.

Diese Aufgabe ist bei einer Sattelzugmaschine der gattungsgemäßen Art erfindungsgemäß durch das Vorsehen eines Multifunktions-Querträgers im/am Fahrgestell-Rahmen mit Merkmalen entsprechend dem Kennzeichen des Anspruches 1 gelöst.

Vorteilhafte Ausgestaltungen und Weiterbildungen dieser Lösung sind in den Unteransprüchen angegeben.

Die Erfindung schlägt gegenüber dem herkömmlichen Weg, den Rahmen vor und/oder hinter der Leichtbau-Sattelkupplung durch wenigstens einen einfachen Querträger zu versteifen, einen völlig anderen Weg vor. Es wurde ein spezieller Querträger geschaffen, der innerhalb des Fahrgestell-Rahmens auch an einem speziellen Ort angeordnet ist, an dem er alle seine ihm zugewiesenen Funktionen mit hohem Wirkungsgrad erfüllen kann. Dieser spezielle Ort ist oberhalb des Getriebes, wobei der Querträger sich als vergleichsweise großflächiges Organ lagemäßig beginnend etwa ab der Fahrerhaus-Rückwand nach hinten erstreckt. Die Erfindung erschöpft sich jedoch nicht im bloßen Vorsehen dieses zusätzlichen Querträgers an dieser speziellen Stelle, sondern prägt diesem Querträger auch noch eine Anzahl von Funktionen auf, so daß er sich innerhalb der Sattelzugmaschine als Multifunktions-Querträger darstellt. Primär bildet dieser erfindungsgemäße Multifunktions-Querträger ein zusätzliches rahmenversteifendes Organ, das diesem Zweck entsprechend ausgebildet ist und beide Rahmen-Längsträger verbindet. In weiterer vorteilhafter Funktion ist dieser erfindungsgemäße Multifunktions-Querträger auch als begehbare Plattform mit rutschfester Oberseite ausgebildet, was dem Fahrer oder Beifahrer eine sichere Begehung des Fahrgestellbereiches zwischen der Fahrerhaus-Rückwand und der Stirnwand eines an der Sattelkupplung angeschlossenen Aufliegers zwecks An- und Abkopplung der zwischen beiden Fahrzeugteilen notwendigen Versorgungsleitungen ermöglicht. Desweiteren ist dem erfindungsgemäßen Multifunktions-Querträger aufgrund seiner ihm erfindungsgemäß zugewiesenen Anordnungsstelle oberhalb des Getriebes der Antriebseinrichtung auch die Funktion eines Schallabstrahlungsbegrenzungsorganes zugewiesen. Dabei kann an seiner Unterseite schalldämmendes Material angebracht sein. Dieses trägt je nach Art und Dicke in nennenswertem Maße zur Schalleindämmung der Triebwerksgeräusche und damit zu einem erhöhten Umweltschutzpotential bei. Darüber hinaus eignet sich der erfindungsgemäße Multifunktions-Querträger aufgrund seiner Ausgestaltung und räumlichen Ausdehnung in weiterer Funktion auch hervorragend als Träger für anzubauende Fahrzeugteile, wofür er entsprechend ausgebildet bzw. ausgerüstet ist.

Ersichtlicherweise erbringt der erfindungsgemäße Multifunktions-Querträger innerhalb der Sattelzugmaschine einen wesentlich höheren Nutzeffekt als ein herkömmlicher Querträger, dem nur die Funktion der Rahmenversteifung zukommt.

Nachstehend ist die erfindungsgemäße Lösung anhand mehrerer in der Zeichnung dargestellter Ausführungsbeispiele noch näher erläutert. In der Zeichnung zeigen:
- Fig. 1: schematisch in Draufsicht eine Sattelzugmaschine mit einer ersten Ausführungsform des erfindungsgemäßen Multifunktions-Querträgers,
- Fig. 2: schematisch in Draufsicht eine Sattelzugmaschine mit einer zweiten Ausführungsform des erfindungsgemäßen Multifunktions-Querträgers,
- Fig. 3: schematisch die Sattelzugmaschine gemäß Fig. 2 in Seitenansicht,
- Fig. 4: einen Schnitt durch die Darstellung gemäß Fig. 1 entlang der dort eingezeichneten Schnittlinie IV-IV,
- Fig. 5: einen Querschnitt durch eine alternative Ausführungsform des erfindungsgemäßen Multifunktions-Querträgers, und
- Fig. 6: im Querschnitt eine weitere Ausführungsform des erfindungsgemäßen Multifunktions-Querträgers.

In den Figuren sind gleiche bzw. einander entsprechende Bauteile der Übersichtlichkeit wegen mit gleichem Bezugszeichen angezogen.

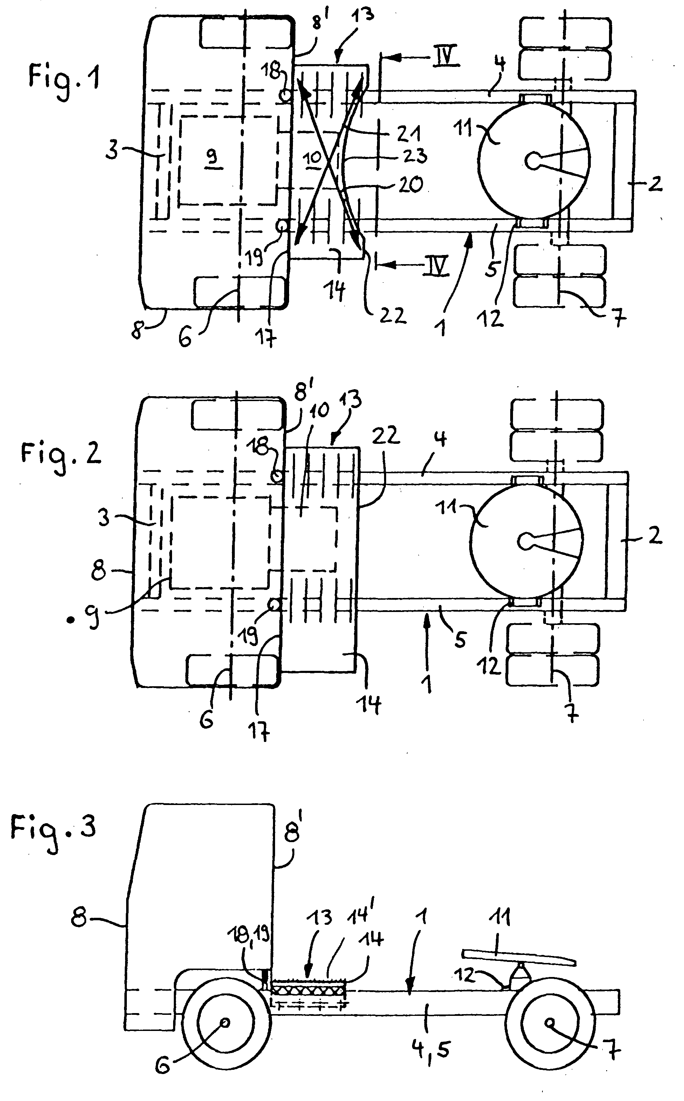

Die Fig. 1 bis 3 zeigen eine Sattelzugmaschine, deren Fahrgestell-Rahmen 1 aus zwei über mehrere Querträger 2, 3 miteinander verbundenen Längsträgern 4, 5 besteht. An diesem Fahrgestell-Rahmen 1 sind über übliche Aufhängungs- und Federungsorgane wenigstens eine Vorder- und Hinterachse 6 bzw. 7 angeschlossen. Außerdem sind am Fahrgestell-Rahmen 1 ein Fahrerhaus 8, eine Antriebseinrichtung mit Motor 9 und Getriebe 10 sowie eine Sattelkupplung 11 angebaut. Bei dieser Sattelkupplung 11 handelt es sich vorzugsweise um eine solche der Leichtbauweise, die über eine vergleichsweise einfache Quertraverse 12 mit den beiden Rahmen-Längsträgern 4, 5 verbunden ist.

Erfindungsgemäß kennzeichnet sich diese Sattelzugmaschine durch das Vorsehen eines Multifunktions-Querträgers 13 im bzw. am Fahrgestell-Rahmen 1 und zwar lagemäßig im Bereich oberhalb des Getriebes 10, beginnend etwa ab der Fahrerhaus-Rückwand 8' und sich räumlich nach hinten erstreckend. Der Multifunktions-Querträger 13 ist generell
a) als zusätzliches, beide Rahmen-Längsträger 4, 5 verbindendes Rahmenversteifungsorgan ausgebildet, und
b) als begehbare, mit rutschfester Oberseite 14' ausgestattete Plattform 14 ausgebildet, und
c) als Schallabstrahlungsbegrenzungselement wirkend ausgebildet. Im Rahmen dieser Funktion kann er unterseitig mit Schalldämmungsmaterial 15 versehen sein.

Über diese Funktionen hinaus kann es sich als zweckmäßig und sehr vorteilhaft erweisen, den Multifunktions-Querträger 13 auch als Träger für anzubauende Fahrzeugteile 16 heranzuziehen und ihn diesem Zweck entsprechend auszubilden bzw. auszurüsten.

Nachstehend ist auf verschiedene Einzelheiten und Ausführungsmöglichkeiten des Multifunktions-Querträgers 13 näher eingegangen.

Der Multifunktions-Querträger 13 schließt sich mit der Vorderkante 17 seiner in Draufsicht gesehen großflächigen, etwa rechteckig ausgebildeten Plattform 14 vorzugsweise unmittelbar hinter den im Bereich der Fahrerhaus-Rückwand 8' gegebenen und der rückwärtigen Fahrerhauslagerung dienenden Federbeinen 18, 19 an, erstreckt sich in Fahrzeug-Längsrichtung zumindest bis zum hinteren Ende des solchermaßen schalldämmend abgedeckt überquerten Getriebes 10 und ist in diesem Bereich des Fahrgestell-Rahmens 1 an dessen beiden Längsträgern 4, 5 angeschlossen. In vorteilhafter Weise hat der Multifunktions-Querträger 13 in Fahrzeug-Längsrichtung gesehen eine solche befestigungs- und kraftübertragungswirksame Länge und ist in sich so gestaltet und an den Rahmen-Längsträgern 4, 5 befestigt, daß er innerhalb des Fahrgestell-Rahmens 1 die Funktion eines Schubfeldträgers übernehmen kann, was in Fig. 1 schematisch durch die sich kreuzenden Pfeile 20, 21 angedeutet ist. Hierzu kann der Multifunktions-Querträger 13 - wie aus Fig. 1 ersichtlich - an seiner Hinterkante 22 und gegebenenfalls auch Vorderkante 17 mit einer Einschnürung 23 ausgestattet sein. Zweckmäßigerweise hat die Plattform 14 des Multifunktions-Querträgers 13 eine in Fahrzeug-Längsrichtung gesehen solche Länge, daß sie die übliche Distanz zwischen der Fahrerhaus-Rückwand 8' und der Stirnwand eines an der Sattelkupplung 11 angeschlossenen Aufliegers zumindest weitestgehend überbrückt und damit eine solche Größe hat, daß dem Fahrer oder Beifahrer ein sicheres Begehen und Stehen zwecks An- und Abkopplung der zwischen den beiden Fahrzeug-Teilen notwendigen Versorgungsleitungen möglich ist.

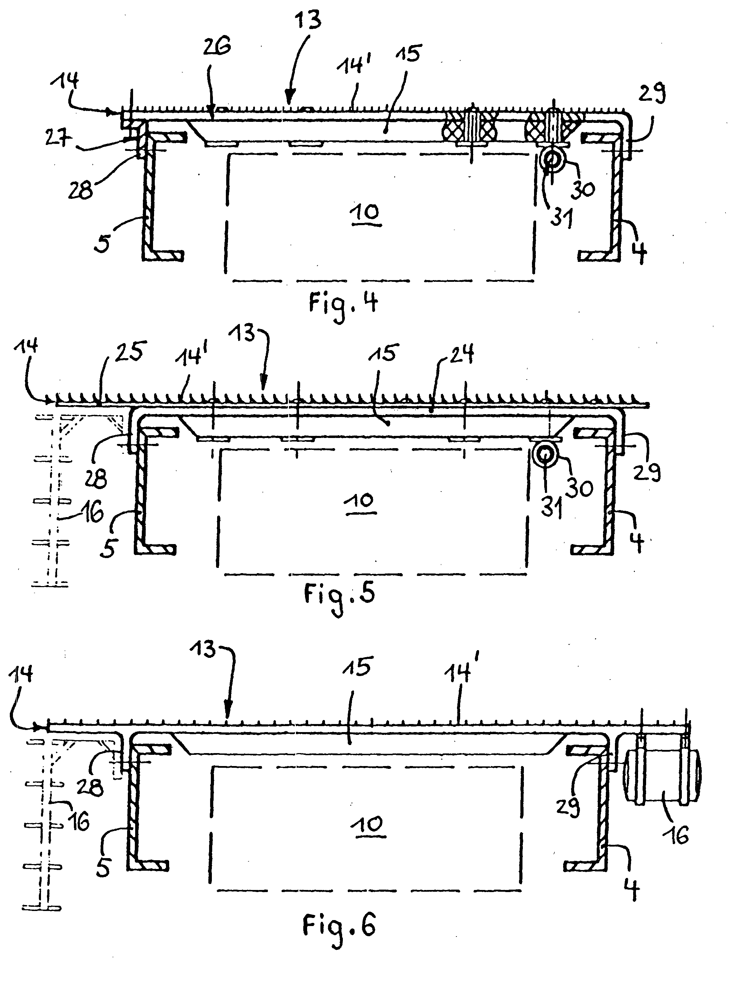

Der Multifunktions-Querträger 13 kann insgesamt einstückig durch Gießen, Pressen oder Schmieden hergestellt sein, wobei die rutschfeste Oberseite 14' an der Plattform 14 durch entsprechende Formgebung erzeugt ist. Diese Ausführungsform ist aus Fig. 6 ersichtlich. Alternativ hierzu kann der Multifunktions-Querträger 13 aber auch - wie aus Fig. 5 ersichtlich - aus einem einstückig durch Gießen, Pressen oder Schmieden hergestellten Grundkörper 24 und einer oben daran befestigten, die Plattform 14 bildenden Platte 25 zusammengesetzt sein, auf der die rutschfeste Oberseite 14' gegeben ist. Bei einer weiteren, aus Fig. 4 ersichtlichen Ausführungsform ist der Multifunktions-Querträger 13 aus mehreren vorgefertigten und fest zusammengefügten Teilen 26, 27 zusammengesetzt. Die Plattform 14 ist dabei Bestandteil des Teiles 26, an dem die rutschfeste Oberseite 14' gegeben ist.

Die rutschfeste Oberseite 14' des Multifunktions-Querträgers 13 kann beispielsweise durch unmittelbare Oberseitengestaltung wie Riffelung, Noppung, Kerbung oder dergleichen der begehbaren Plattform erzeugt sein. Alternativ hierzu ist es auch möglich, die Plattform 14 bzw. die Platte 25, 26 durch ein entsprechend geformtes Riffelblech zu realisieren, dessen nach oben weisende Riffelung die rutschfeste Plattformoberseite 14' bildet. Anstelle des Riffelbleches könnte auch ein Lochblech verwendet werden, dessen Löcher zur Bildung der rutschfesten Plattformoberseite 14' nach oben ausgeprägte Ränder aufweisen. In weiterer Alternative ist es möglich, die Plattform 14 zunächst oben im wesentlichen eben und glatt herzustellen und dann darauf oben entweder eine Schicht aus rutschfestem Material oder eine vom Material bzw. ihrer Ausgestaltung her gesehen die Rutschfestigkeit gewährleistende Platte anzubringen.

Unabhängig von seiner sonstigen Ausgestaltung weist der Multifunktions-Querträger 13 an den beiden Längsseiten außen oder etwas eingerückt nach unten abragende Wangen 28, 29 auf, mit denen er die beiden Rahmen-Längsträger 4, 5 außen vorzugsweise abstandslos übergreift und an diesen durch Schrauben, Nieten oder Schweißen befestigt ist.

Wie aus den Fig. 5 und 6 ersichtlich, kann der Multifunktions-Querträger 13 mit seiner begehbaren Plattform 14 den Fahrgestell-Rahmen 1 seitlich bis zur Fahrzeug-außenkontur hin sowohl ein - als auch beidseitig überragen. An der Unterseite des überstehenden Plattformbereiches können Fahrzeugteile 16 wie z.B. eine Trittleiter, Druckluftbehälter, Werkzeugkasten, Batteriekasten, Staukasten und dergleichen angebracht sein. Gleichermaßen können an der Unterseite des Multifunktions-Querträgers 13 auch Halter oder dergleichen Vorrichtungen 30 zum Befestigen und Tragen von verlegten elektrischen und/oder pneumatischen und/oder hydraulischen Leitungen 31 gegeben sein (siehe Fig.4 und 5).

Das Schalldämmungsmaterial 15 kann beispielsweise durch eine mehrere Zentimeter dicke Matte aus schallabsorbierendem Material gebildet sein, die an der Unterseite des Multifunktions-Querträgers 13 bzw. seines Grundkörpers 24 bzw. seines Teiles 26 angeklebt oder durch wieder trennbare Befestigungselemente an diesem befestigt ist. Fig. 6 zeigt den Fall der Verklebung, die Fig. 4 und 5 zeigen den Fall der Verschraubung, wobei Fig. 4 die Einzelheit einer solchen Verschraubung aufzeigt.

Die schematischen Darstellungen in den Fig. 1 bis 6 dienen zur Kenntlichmachung sowohl des Grundprinzipes als auch einiger Ausführungsformen und Anbringungsformen des erfindungsgemäßen Multifunktions-Querträgers 13, ohne diesen jedoch auf diese Ausführungsformen einschränken zu wollen. Der Schutzumfang erstreckt sich generell auf alle in der Praxis darstellbaren Ausführungs- und Anbringungsarten des erfindungsgemäßen Multifunktions-Querträgers wie in den nachfolgenden Ansprüchen definiert.

## Patentansprüche

1. Sattelzugmaschine, deren Fahrgestell-Rahmen (1) aus zwei über mehrere Querträger (2, 3) miteinander verbundenen Längsträgern (4, 5) besteht, mit Vorder-und Hinterachsen (6, 7) verbunden ist sowie ein Fahrerhaus (8), eine Antriebseinrichtung mit Motor (9) und Getriebe (10) und eine Sattelkupplung (11) dahinter trägt, gekennzeichnet durch das Vorsehen eines Multifunktions-Querträgers (13) im/am Fahrgestell-Rahmen (1), der sich lagemäßig im Bereich oberhalb des Getriebes (10) und beginnend etwa ab der Fahrerhaus-Rückwand (8') räumlich nach hinten erstreckt und der
a) als zusätzliches, beide Rahmen-Längsträger (4, 5) verbindendes Rahmenversteifungsorgan und
b) als begehbare, mit rutschfester Oberseite (14') ausgestattete Plattform (14, 25) und
c) als Schallabstrahlungsbegrenzungselement wirkend
ausgebildet ist.

2. Sattelzugmaschine nach Anspruch 1, dadurch gekennzeichnet, daß der Multifunktions-Querträger (13) in Fahrzeug-Längsrichtung gesehen eine solche befestigungs- und kraftübertragungswirksame Länge hat, ferner in sich so gestaltet und an den Rahmen-Längsträgern (4, 5) befestigt ist, daß er innerhalb des Fahrgestell-Rahmens (1) die Funktion eines Schubfeldträgers übernimmt.

3. Sattelzugmaschine nach Anspruch 1, dadurch gekennzeichnet, daß der Multifunktions-Querträger (13) sich mit seiner in Draufsicht gesehen im wesentlichen rechteckigen Plattform (14) unmittelbar hinter den der rückwärtigen Fahrerhauslagerung dienenden Federbeinen (18, 19) anschließend und sich in Fahrzeug-Längsrichtung zumindest bis zum hinteren Ende des solchermaßen schallisoliernd abgedeckt überquerten Getriebes (10) erstreckend am Fahrgestell-Rahmen (1) befestigt ist

4. Sattelzugmaschine nach einem der Ansprüche 2 und 3, dadurch gekennzeichnet, daß die Plattform (14) des Multifunktions-Querträgers (13) in Fahrzeug-Längsrichtung gesehen eine solche Länge hat, daß sie die übliche Distanz zwischen der Fahrerhaus-Rückwand (8') und der Stirnwand eines an der Sattelkupplung (11) angekuppelten Aufliegers zumindest weitestgehend überbrückt und damit eine solche Größe aufweist, daß dem Fahrer bzw. Beifahrer ein sicheres Begehen und Stehen zwecks An- und Abkopplung der zwischen den beiden Fahrzeug-Teilen notwendigen Versorgungsleitungen möglich ist.

5. Sattelzugmaschine nach Anspruch 1, dadurch gekennzeichnet, daß der Multifunktions-Querträger (13) insgesamt einstückig durch Gießen, Pressen oder Schmieden hergestellt ist.

6. Sattelzugmaschine nach Anspruch 1, dadurch gekennzeichnet, daß der Multifunktions-Querträger (13) sich aus einem einstückig durch Gießen, Pressen oder Schmieden hergestellten Grundkörper (24) und einer darauf angebrachten Beschichtung bzw. Platte mit rutschfester Oberseite zusammensetzt.

7. Sattelzugmaschine nach Anspruch 1, dadurch gekennzeichnet, daß der Multifunktions-Querträger (13) sich aus einem Grundkörper, der aus mehreren fest zusammengefügten Teilen (26', 27) besteht, und einer darauf angebrachten Beschichtung bzw. Platte mit rutschfester Oberseite zusammensetzt.

8. Sattelzugmaschine nach Anspruch 6, dadurch gekennzeichnet, daß am einstückig hergestellten Grundkörper des Multifunktions-Querträger (13) die begehbare Plattform (14) mit angeformt ist.

9. Sattelzugmaschine nach Anspruch 7, dadurch gekennzeichnet, daß ein Teil (26) des zusammengesetzten Grundkörpers (26, 27) des Multifunktions-Querträgers (13) die begehbare Plattform (14) umfaßt.

10. Sattelzugmaschine nach einem der Ansprüche 5 und 8, dadurch gekennzeichnet, daß die rutschfeste Oberseite (14') des Multifunktions-Querträgers (13) durch entsprechende Oberflächengestaltung wie Riffelung, Noppung, Kerbung oder dergleichen der begehbaren Plattform (14) erzeugt ist.

11. Sattelzugmaschine nach einem der Ansprüche 1 bis 9, dadurch gekennzeichnet, daß die begehbare Plattform (14) als Teil des Multifunktions-Querträgers (13) durch ein entsprechend geformtes Riffelblech gebildet ist, dessen nach oben weisende Riffelung die rutschfeste Plattformoberseite (14') bildet.

12. Sattelzugmaschine nach einem der Ansprüche 1 bis 9, dadurch gekennzeichnet, daß die begehbare Plattform als Teil des Multifunktions-Querträgers (13) von Löchern durchbrochen bzw. durch ein Lochblech gebildet ist, wobei die Löcher zur Bildung der rutschfesten Plattformoberseite (14') nach oben ausgeprägte Ränder aufweisen.

13. Sattelzugmaschine nach einem der Ansprüche 1 bis 9, dadurch gekennzeichnet, daß die begehbare Plattform (14) als Teil des Multifunktions-Querträgers (13) mit einer im wesentlichen ebenen und glatten Oberseite hergestellt ist, auf der dann eine die Rutschsicherheit gewährleistende Schicht oder Platte angebracht ist, die vom Material bzw. ihrer Ausgestaltung her gesehen die Rutschsicherheit gewährleistet.

14. Sattelzugmaschine nach Anspruch 6, dadurch gekennzeichnet, daß der Multifunktions-Querträger (13) an beiden Längsseiten außen oder etwas eingerückt nach unten abragende Wangen (28, 29) aufweist, mit denen er die beiden Rahmen-Längsträger (4, 5) außen vorzugsweise abstandslos übergreift und an diesen durch Schrauben, Nieten oder Schweißen befestigt ist.

15. Sattelzugmaschine nach Anspruch 1, dadurch gekennzeichnet, daß an der Unterseite des Multifunktions-Querträgers (13) bzw. dessen Grundkörper als Schalldämmungsmaterial (15) eine mehrere.Zentimeter dicke Matte aus schallabsorbierendem Material vorgesehen und dort angeklebt oder durch wieder trennbare Befestigungselemente befestigt ist.

16. Sattelzugmaschine nach Anspruch 1, dadurch gekennzeichnet, daß der Multifunktions-Querträger (13) auch als Träger für anzubauende Fahrzeugteile (16, 31) ausgebildet bzw. hierfür entsprechend ausgerüstet ist.

17. Sattelzugmaschine nach Anspruch 16, dadurch gekennzeichnet, daß der Multifunktions-Querträger (13) mit seiner begehbaren Plattform (14) den Fahrgestell-Rahmen (1) seitlich auf wenigstens einer Seite bis zur Fahrzeug-Außenkontur überragt und an der Unterseite des überragenden Platten-Bereiches Fahrzeugteile (16) wie eine Trittleiter, Druckluftbehälter, Werkzeugkasten, Batteriekasten, Staukasten und dergleichen angebracht sind.

18. Sattelzugmaschine nach Anspruch 16, dadurch gekennzeichnet, daß an der Unterseite des Multifunktions-Querträgers (13) Halter (30) oder dergleichen Vorrichtungen zum Befestigen und Tragen von verlegten elektrischen und/oder pneumatischen und/oder hydraulischen Leitungen (31) angeordnet sind.

## Claims

1. Semitrailer tractor, whose chassis frame (1) consists of two longitudinal members (4, 5) connected with each other via several cross members (2, 3), is connected with front and rear axles (6, 7) and supports a cab (8), a drive unit with engine (9), gearbox (10) and a fifth-wheel coupling (11) behind it, characterised by the provision of a multi-function cross member (13) which is located in/on the chassis frame (1) in the area above the gearbox (10), extends approximately from the cab rear wall (8') towards the rear and is designed
• as an additional reinforcement organ connecting the two frame longitudinal members (4, 5) and
• as a platform which can be walked on and is provided with an anti-slip upper side (14') and
• to act as an element limiting sound radiation.

2. Semitrailer tractor according to Claim 1, characterised in that the multi-function cross member (13), as viewed in the vehicle's longitudinal direction, has an effective fastening and power-transmitting length and, in addition, is in itself designed and attached to the frame longitudinal members (4, 5) in such a way that it assumes the function of a ?... carrier within the chassis frame (1).

3. Semitrailer tractor, according to Claim 1, characterised in that the multi-function cross member (13) with its platform which, when viewed from above, has an essentially rectangular shape starts immediately behind the spring struts (18, 19) serving the rear cab mounts, extends in the vehicle's longitudinal direction at least as far as to the rear end of the gearbox (10) covered, which is thereby soundproofed, and is attached to the chassis frame (1).

4. Semitrailer tractor, according to the Claims 2 and 3, characterised in that the platform (14) of the multi-function cross member (13), if viewed in vehicle's longitudinal direction, has such a length that it at least largely spans the usual distance between the cab rear wall (8') and the front wall of a semitrailer hitched up to the fifth-wheel coupling (11) and, consequently, is of such a size that the driver or co-driver can safely walk and stand on it for purposes of connecting up or disconnecting the necessary supply lines between the two vehicle parts.

5. Semitrailer tractor according to Claim 1, characterised in that the multi-function cross member (13) is made as a single piece by either casting, pressing or forging.

6. Semitrailer tractor according to Claim 1, characterised in that the multi-function cross member (13) is composed of a base body (24) made as single piece by either casting, pressing or forging and of a coating or plate with an anti-slip upper side, which coating or plate is attached to said base body (24).

7. Semitrailer tractor according to Claim 1, characterised in that the multi-function cross member (13) is composed of a base body consisting of several parts (26', 27) firmly joined together and of a coating or plate with an anti-slip upper side, which coating or plate is attached to said base body.

8. Semitrailer tractor according to Claim 6, characterised in that the contours of the platform (14) which can be walked on follow those of the single-piece base body of the multi-function cross member (13) platform (14).

9. Semitrailer tractor according to Claim 7, characterised in that one part (26) of the composite base body (26, 27) of the multi-function cross member (13) comprises the platform (14) which can be walked on.

10. Semitrailer tractor according to one of the Claims 5 and 8, characterised in that the anti-slip upper side (14') of the multi-function cross member (13) has been made by providing the surface of said platform (14) with ripples, nops, grooves or similar features.

11. Semitrailer tractor according to one of the Claims 1 to 9, characterised in that the platform (14) which can be walked on is, as part of the multi-function cross member (13), formed by a suitably shaped rippled metal sheet whose upward-pointing ripples form the platform's anti-slip upper side (14').

12. Semitrailer tractor according to one of the Claims 1 to 9, characterised in that the platform (14) which can be walked on is, as part of the multi-function cross member (13), provided with through holes, or with a perforated metal sheet, the holes showing upward-projecting rims to form the platform's anti-slip upper side (14').

13. Semitrailer tractor according to one of the Claims 1 to 9, characterised in that the platform (14) which can be walked on is, as part of the multi-function cross member (13), manufactured with a basically flat and smooth upper side to which is attached a coating or plate whose material and/or design ensures anti-slip safety.

14. Semitrailer tractor according to Claim 6, characterised in that the two longitudinal sides of the multi-function cross member (13) have, on the outside or slightly drawn-in, downward-pointing webs (28, 29) with which they straddle the two frame longitudinal members (4, 5) on the outside and preferably without any intervening distance and are fastened to said frame longitudinal members (4, 5) by means of bolts, rivets or welds.

15. Semitrailer tractor according to Claim 1, characterised in that the underside of the multi-function cross member (13), ie its base body, is provided with soundproofing material (15) in the form of a several centimetre thick mat made of sound-absorbing material and glued into place there or attached by means of detachable fastening elements.

16. Semitrailer tractor according to Claim 1, characterised in that the multi-function cross member (13) is also designed as a carrier for vehicle parts (16, 31) to be attached or is suitably equipped for this purpose.

17. Semitrailer tractor according to Claim 16, characterised in that the multi-function cross member (13) with its platform (14) which can be walked on projects beyond the chassis frame (1) laterally on at least one side as far as to the vehicle's outer contour and that vehicle parts (16) such as a stepladder, compressed-air tanks, tool boxes, battery boxes, storage boxes and similar items are attached to the underside of the projecting plate area.

18. Semitrailer tractor according to Claim 16, characterised in that brackets (30) or similar devices for attaching and supporting routed electric and/or pneumatic and/or hydraulic lines (31) are fitted to the underside of the multi-function cross member (13).

## Revendications

1. Tracteur de train routier dont le châssis (1) se compose de deux longerons (4, 5) reliés par plusieurs traverses (2, 3), est relié à un essieu avant et à un essieu arrière (6, 7), et supporte une cabine (8), une unité motrice composée d'un moteur (9) et d'une transmission (10) ainsi qu'un attelage (11),
caractérisé par
une traverse polyvalente (13) installée sur ou dans le châssis (1) dans une position au-dessus de la boîte de vitesses (10) et en commençant sensiblement à partir de la paroi arrière (8') de la cabine, en s'étendant vers l'arrière, et qui est en outre réalisée comme :
a) organe de rigidification de châssis, complémentaire, reliant les deux longerons (4, 5),
b) plate-forme (14, 25) accessible munie d'une face supérieure antidérapante (14'), et
c) élément de limitation de rayonnement phonique.

2. Tracteur selon la revendication 1,
caractérisé en ce que
la traverse polyvalente (13) possède vue dans la direction longitudinale du véhicule, une longueur active pour la fixation et la transmission des forces, telle qu'elle est en outre conçue et fixée aux longerons (4, 5) pour assurer la fonction d'une traverse de poussée du châssis (1).

3. Tracteur selon la revendication 1,
caractérisé en ce que
la traverse polyvalente (13) est fixée au châssis (1) avec sa plate-forme (14) essentiellement rectangulaire en vue de dessus, installée directement derrière les jambes élastiques (18, 19) servant au montage arrière de la cabine, et s'étend dans la direction longitudinale du véhicule, au moins jusqu'à l'extrémité arrière de la boîte de vitesses (10) ainsi recouverte et chevauchée de manière à réaliser l'isolation phonique.

4. Tracteur selon l'une des revendications 2 et 3,
caractérisé en ce que
la plate-forme (14) de la traverse polyvalente (13), vue dans la direction longitudinale du véhicule a une longueur telle qu'elle chevauche la distance habituelle entre la paroi arrière (8') de la cabine et la paroi frontale d'une remorque attelée à l'attelage (11), et présente ainsi une dimension permettant au conducteur ou au passager d'accéder et de se tenir en toute sécurité pour le couplage et découplage des conduites d'alimentation nécessaires entre les deux parties du train routier.

5. Tracteur selon la revendication 1,
caractérisé en ce que
la traverse polyvalente (13) est réalisée globalement en une seule pièce par coulée, travail à la presse ou à la forge.

6. Tracteur selon la revendication 1,
caractérisé en ce que
la traverse polyvalente (13) se compose d'un corps de base (24) fabriqué en une seule pièce par coulée, travail à la presse ou forgeage et d'un revêtement ou d'une plaque à face supérieure antidérapante rapportée sur le corps de base.

7. Tracteur selon la revendication 1,
caractérisé en ce que
la traverse polyvalente (13) se compose d'un corps de base en plusieurs pièces assemblées (26', 27) et d'un revêtement ou d'une plaque prévu sur le corps de base et ayant une face supérieure antidérapante.

8. Tracteur selon la revendication 6,
caractérisé en ce que
le corps de base réalisé en une seule pièce de la traverse polyvalente (13) porte la plate-forme accessible (14), réalisée sur cette traverse.

9. Tracteur selon la revendication 7,
caractérisé en ce qu'
une partie (26) du corps de base assemblé (26, 27) de la traverse polyvalente (13) comprend la plate-forme accessible (14).

10. Tracteur selon l'une des revendications 5 et 8,
caractérisé en ce que
la face supérieure antidérapante (14') de la traverse polyvalente (13) est réalisée par une mise en forme appropriée de la surface supérieure, par exemple par des nervures, des bossages, des encoches ou des moyens analogues pour la plate-forme accessible (14).

11. Tracteur selon l'une quelconque des revendications 1 à 9,
caractérisé en ce que
la plate-forme accessible (14) est une partie de la traverse polyvalente (13) réalisée par une tôle nervurée de manière appropriée et dont les nervures tournées vers le haut constituent la face supérieure antidérapante (14') de la plate-forme.

12. Tracteur selon l'une quelconque des revendications 1 à 9,
caractérisé en ce que
la plate-forme accessible est une partie de la traverse polyvalente (13) traversée par des orifices, ou est formée par une tôle perforée dont les orifices ont des bords tournés vers le haut ou matricés pour constituer la face supérieure antidérapante (14') de la plate-forme.

13. Tracteur selon l'une quelconque des revendications 1 à 9,
caractérisé en ce que
la plate-forme accessible (14) est une partie de la traverse polyvalente (13) avec une face supérieure essentiellement plane et lisse recevant une couche ou plaque antidérapante, ayant les caractéristiques antidérapantes du fait de la matière ou de la mise en forme.

14. Tracteur selon la revendication 6,
caractérisé en ce que
la traverse polyvalente (13) comporte des parois latérales (28, 29) dépassant vers le bas, le long des deux côtés longitudinaux, vers l'extérieur ou sensiblement en retrait, par lesquels la traverse chevauche de préférence sans laisser d'intervalle, les deux longerons (4, 5) en étant fixée à ceux-ci par des vis, des rivets ou des soudures.

15. Tracteur selon la revendication 1,
caractérisé en ce que
la face inférieure de la traverse polyvalente (13) ou son corps de base comporte comme matière d'isolation phonique (15), une nappe d'une épaisseur de plusieurs centimètres de matière d'isolation phonique, collée ou fixée par des éléments de fixation amovibles.

16. Tracteur selon la revendication 1,
caractérisé en ce que
la traverse polyvalente (13) est réalisée également comme traverse pour des accessoires (16, 31) à installer ou est équipée de manière appropriée pour celà.

17. Tracteur selon la revendication 16,
caractérisé en ce que
la traverse polyvalente (13) avec sa plate-forme accessible (14), dépasse du châssis (1) du véhicule, au moins d'un côté pour arriver jusqu'au périmètre du véhicule, et la face inférieure de la zone de la plaque qui dépasse comporte des équipements (16) tels qu'une échelle, un réservoir d'air comprimé, une caisse à outils, une caisse à batterie, une caisse de rangement ou des moyens analogues.

18. Tracteur selon la revendication 16,
caractérisé en ce que
la face inférieure de la traverse polyvalente (13) comporte des supports (30) ou des dispositifs analogues pour fixer et porter des conduites ou câbles électriques, pneumatiques ou hydrauliques (31).
